# EUROPEAN PATENT APPLICATION

(11) **EP 2 154 601 A1**
(43) Date of publication of application: **17.02.2010**
(21) Application number: 09167622.1
(22) Date of filing: 11.08.2009
(51) Int. Cl.: G06F 3/048

(54) **Method, apparatus and mobile terminal for executing graphic touch command**

(30) Priority: 11.08.2008 CN 200810133373
(71) Applicant: Shenzhen Huawei Communication Technologies Co., Ltd, Shenzhen, Guangdong 518129 (CN)
(72) Inventor: Dong, Yongjian, Shenzhen Guangong 518129 (CN)
(74) Representative: Körber, Martin Hans

(57) **Abstract**

This invention provides a method, an apparatus and a mobile terminal for executing a graphic touch command. The method for executing a graphic touch command comprises acquiring touched graph information from a touched graph; acquiring a graph parameter from the touched graph information; and executing an operation command corresponding to the graph parameter according to the acquired graph parameter. Use of graphs as operation commands greatly increases the number of the operation commands; moreover, one graph is used to execute only one operation command, so that the operation command represented by the graph would not be different due to different execution environments, and the operation is hence rendered direct and fast.

## Description

### BACKGROUND OF THE INVENTION

The present invention relates to the field of touching technology, and more particularly to a method, an apparatus and a mobile terminal for executing a graphic touch command.

### Description of the Related Art

The advent of the Age of Information brings about a qualitative leap forward to people in terms of living quality, especially with the various resultant machines and electronic products that provide people with personality and convenience. People need to control these machines to enjoy the convenience brought about by the electronic products. Although the keyboard has long been in use, the advantage of touching technology is much remarkable, and research/development of the touching technology is imperative.

The current touching technology is divided into two main types, in one of which a touch screen is used to drive a cursor to select a specific command button on the screen of the device and click the button on the touch screen to execute the corresponding command. This prior art is directed to the mere replacement of the mouse, and is disadvantageous in that command buttons have to be displayed on the screen, thus occupying the space for display, and the number of commands is also spatially restricted.

The second type of the prior art makes use of multi-point touch, whereby the corresponding command is executed in accordance with the track of the touch points. The track of the touch is usually up-and-down sliding, or left-to-right sliding, or multi-point sliding, and such touch command is highly environment-dependent. For instance, in the case of the same left-to-right track, the touch command may be to execute turning of pages while reading an electronic book, and may be to execute dragging of image objects while compiling an image. Accordingly, this technology is disadvantageous in that the number of touch commands is very limited, the same sliding might be considered as different commands in such different environments as reading an electronic book or compiling an image, so that it is highly environment-dependent.

### Summary of the Invention

The present invention provides a method, an apparatus and a mobile terminal for executing a graphic touch command, whereby the number of touch commands is effectively increased, and the drawback of environment-dependency of the touch command is overcome.

An embodiment of the present invention provides a method for executing a graphic touch command, comprising: acquiring touched graph information from a touched graph; acquiring a graph parameter from the touched graph information; and executing an operation command corresponding to the graph parameter according to the acquired graph parameter.

Another embodiment of the present invention provides an apparatus for executing a graphic touch command, comprising: a first acquiring unit adapted to acquire touched graph information; a second acquiring unit adapted to acquire a graph parameter from the touched graph information acquired by the first acquiring unit; and an executing unit adapted to execute an operation command corresponding to the graph parameter according to the graph parameter acquired by the second acquiring unit.

A further embodiment of the present invention provides a mobile terminal, comprising: a first acquiring unit adapted to acquire touched graph information; a second acquiring unit adapted to acquire a graph parameter from the touched graph information acquired by the first acquiring unit; and an executing unit adapted to execute an operation command corresponding to the graph parameter according to the graph parameter acquired by the second acquiring unit.

Advantageous effects achievable by employing the embodiments of the present invention are as follows: operation commands represented by respective touched graphs on the touch screen is executed in accordance with the information of the different touched graphs, to thereby perform control of the device, and use of graphs to represent operation commands greatly increases the number of the operation commands; moreover, one graph is used to execute only one operation command, so that the operation command represented by the graph would not be different due to different execution environments, and the operation is hence rendered direct and fast.

### BRIEF DESCRIPTION OF THE DRAWINGS

Fig. 1 is a flowchart illustrating a method for executing a graphic touch command according to an embodiment of the present invention;

Fig. 2 is a flowchart illustrating a method for executing a graphic touch command according to another embodiment of the present invention;

Fig. 3 is a flowchart illustrating a method for executing a graphic touch command according to a still another embodiment of the present invention; and

Fig. 4 is a configure diagram illustrating an apparatus for executing a graphic touch command according to a yet another embodiment of the present invention.

### DETAILED DESCRIPTION OF THE EMBODIMENTS

In the embodiments of the present invention, with preset commands being stored in a device, the device acquires touched graph information, calculates the parameter of the graph from the touched graph information, and determines whether the graph parameter is contained in a preset correspondence of commands with a comparison between the calculation result and a graph parameter preset in the device; and if the result of the determination is "yes", executes an operation command corresponding to the graph parameter. According to the embodiments of the present invention, the number of touch commands is greatly increased. Additionally, an embodiment of the present invention provides a method for controlling the device in a mechanical mode.

Firstly, a brief description is given to the method for executing a graphic touch command according to the embodiment of the present, comprising: a first step of acquiring touched graph information from a touched graph, a second step of acquiring a graph parameter from the touched graph information, and a third step of executing an operation command corresponding to the graph parameter according to the acquired graph parameter.

The method according to the embodiment of the present invention is explained in detail below with reference to specific embodiments.

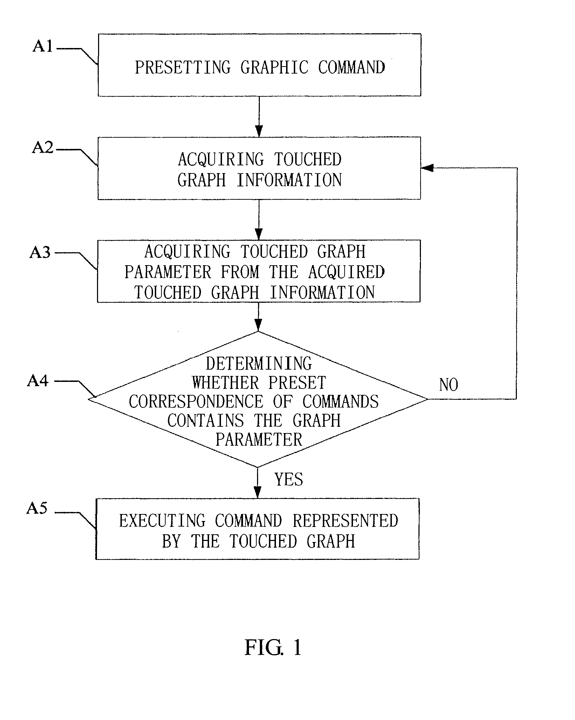

Fig. 1 illustrates a flowchart of the method for executing a graphic touch command according to a first embodiment of the invention.

At step A1, different graphic commands are preset and stored by a device.

The step of presetting the graphic commands comprises presetting a correspondence between graphs represented by parameters and operation commands. It may be possible to preset one or more graph parameters to represent one graph. The graphs represented by the preset parameters correspond to the operation commands on a one-by-one basis. The preset graphs may be such regular graphs as triangles and quadrangles, and may also be such irregular graphs as the shape of a handprint and the shape of a water droplet. Accordingly, it may be possible to preset a triangle to represent an operation command for executing cleaning. It may also be possible to further particularize the triangle, for instance, by taking a regular triangle of 30 square centimeters as the operation command for cleaning, and taking a triangle of 40 square centimeters as the operation command for heating. Alternatively, graphs with different sizes may be used only to represent different operation commands. The graphs are represented by parameters, for instance, a triangle is represented by such parameters that its angles are all 60° and/or its sides are all 10 centers long. Usually, irregular graphs represent different operation commands with their sizes of area. The area is one type of parameter of a graph.

At step A2, touched graph information is acquired by the device.

Specifically, upon contact by the touch screen of the device with the touched graph, data recognizable by the device, i.e. the information of contact points between the touched graph and the touch screen, may be acquired through a sensing means. The information of the contact points includes coordinates of the boundary position of the contact surface between the touched graph and the touch screen and coordinate positions of as many contact points as possible.

At stepA3, a graph parameter may be acquired from the touched graph information.

In accordance with the information of the contact points as acquired, which may be positional information of the boundary points, the device calculates the graph parameters that are descriptions of the graph. The more the parameters are, the more detailed will the graph descriptions be. It may be appreciated that the graph parameters may be acquired by calculation, and may also be acquired in other ways, e.g. the execution command represented by the graph may be determined as long as coordinate value parameters are known.

At step A4, it is determined in accordance with the graph parameters acquired at step A3 as to whether the preset correspondence of commands contains the graph parameter. If the result of the determination is "Yes", the process proceeds to step A5; if the result is "No", the process returns to step A2.

At step A5, the operation command corresponding to the graph parameter is executed.

It is clear from the above descriptions that by contacting different touched graphs on the touch screen, the operation command represented by the corresponding touched graph is executed, so as to complete control of the device. Since the graphs are variegated, the use of graphs as operation commands greatly increases the number of operation commands. Moreover, one graph is used to execute only one operation command, so that the operation command represented by the graph would not be different due to different execution environments, and the operation is hence rendered direct and fast.

The above is directed to an overall generalization about the flow of the method according to the present invention, while the following descriptions are directed to different embodiments in which the graphic command is divided into shape command, area command, and command combining area with shape.

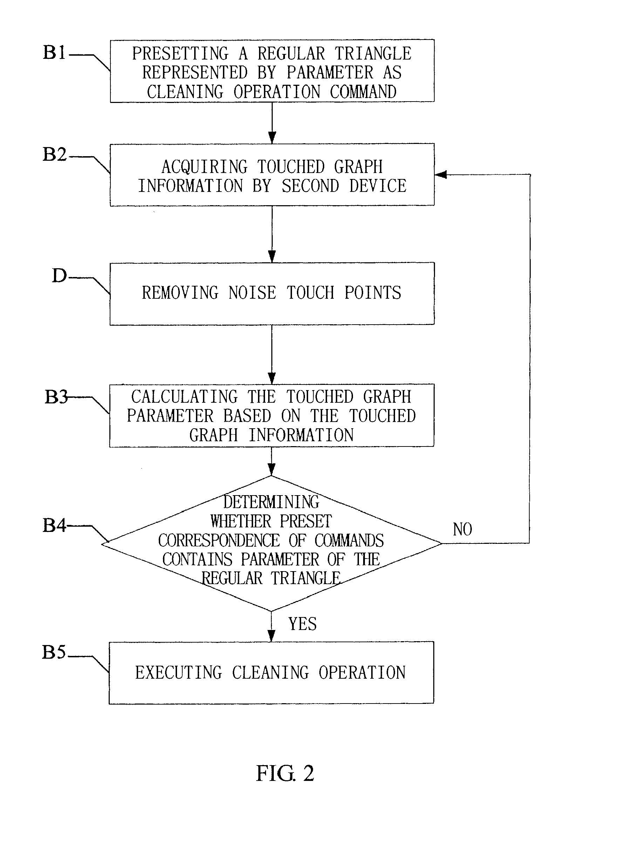

Fig. 2 illustrates a flow chart of a method for executing a graphic touch command according to a second embodiment. Specific steps of the method are described as follows.

At step B1, a graphic command is preset in a second device, for example a regular triangle preset in the second device represents a command for executing a cleaning operation The regular triangle may be represented by any one or combination of the following parameters: lengths of the three sides, sizes of the three angles, a coordinate of the central position, a position of the center of gravity, and a distance from the central position to each side.

The regular triangle preset in this embodiment does not exceed the boundary of the touch screen of the second device, and is not smaller than the area of the minimum graph recognizable by the touch screen of the second device, namely the area identifiable by the maximum resolution.

At step B2, the touch screen of the second device is touched by a triangular touch-control head of the first device, so that the touched graph information is acquired by the second device upon contact with the touched graph of the first device.

The first device touches the touch screen of the second device with the touch-control head provided it has completed operation of the product. The touch-control head in this embodiment is so designed that three sensitive contact points protrude at positions of the three apical angles on the panel of the regular triangular touch-control head; similarly, the touch-control heads of other touched graphs may also be designed so as to protrude contact points at the apical angles. It may be of course also possible not to use the protruding contact points, but to contact the touch screen of the second device with the entire surface of the touch-control head, which, however, is relatively complicated in calculation, for more points are to be calculated.

At step B3, the touched graph information is acquired by the second device upon contact with the touched graph of the first device, and the parameter of the touched graph is calculated by the second device from the touched graph information.

The sensing means on the touch screen of the second device senses the touch points to obtain the positional information of three touch regions, calculates the center of each touch region from the boundary of each touch region, and takes the center of the region as coordinate information at the three apical angles of the triangle, namely to obtain the coordinates of the contact points. The coordinates are coordinates such as (X, Y) in the Cartesian coordinate system, or coordinates in the polar or other coordinate systems. The second device obtains one or more parameters of lengths of the three sides, an angle of each side and the adjacent side, a coordinate of the central position of the triangle, a position of the center of gravity, and a distance from the central position to each side by calculation based on the coordinates of the three contact points.

At step B4, it is determined, in accordance with the result of the calculated graph parameters, as to whether the calculated graph parameters are contained in the parameters of the regular triangle preset at Step B1. If the result of determination is "Yes", the process proceeds to step B5; if the result is "No", the process returns to step B2.

The parameter data of the triangle as calculated in step B3 is compared with the graph parameters preset in the second device to obtain the most similar parameters. Since it is impossible to avoid than to reduce errors, a certain range of errors is allowed in the second device according to the embodiment of the present invention. If the second device determines that the parameters of the triangle coincide with the preset parameters of the regular triangle in accordance with the comparison result and the allowable error range, it is determined to execute the cleaning command. If the error range is exceeded, the second device cannot recognize this operation command, and the process returns to step B2.

B5: The cleaning command is executed.

The method according to the second embodiment of the present invention is advantageous in that, by contacting different touched graphs via the touch screen of the second device, the parameters of the touched graphs are calculated to determine, in accordance with the calculated graph parameters, whether the calculated graph parameters are contained in the preset parameters of the regular triangle, and the corresponding operation command is executed to complete mechanical-to-mechanical control if the result of the determination is "yes". Since the graphs are variegated, the use of graphs as operation commands greatly increases the number of operation commands. Moreover, one graph is used to execute only one operation command, so that the operation command represented by the graph would not be different due to different execution environments, and the operation is hence rendered direct and fast.

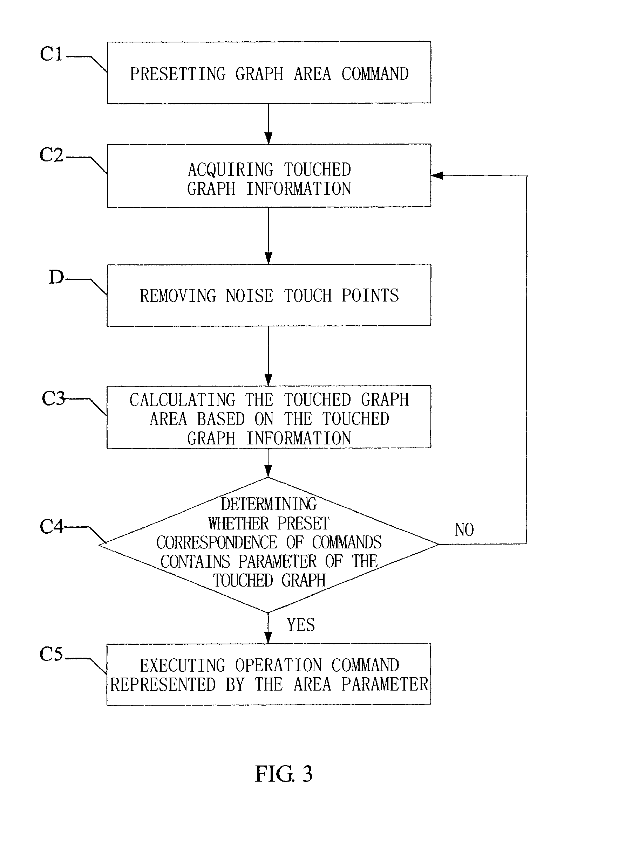

Figure 3 illustrates a method for executing a graphic touch command according to a third embodiment of the invention. This embodiment differs from the second embodiment in the fact that the graph parameters preset in the second embodiment of the present invention include parameters representative of the shapes and sizes of the graphs, and the graphs may usually be such regular graphs as triangles and quadrangles, whereas the graphs preset in the third embodiment of the present invention may only be represented by area parameters, graphs with different areas represent different operation commands, and the graphs may be such irregular graphs as handprint shapes and raindrop shapes, and may also be regular graphs. The steps of the method according to the third embodiment are described below with reference to figure 3.

At step C1, graphic commands are preset in the second device to represent a graph having an area of 15 to 20 square centimeters as a command to execute a cleaning operation.

Specifically, the touch screen of the second device in this embodiment may entirely cover the preset graph, and the area of the preset graph is not smaller than the area of the minimum graph recognizable by the touch screen of the second device, i.e. the area identifiable by the maximum resolution.

At step C2, The first device contacts with the touch screen of the second device via its touch-control panel of 16 square centimeters, so that the second device acquires touched graph information upon contact with the touched graph of the first device.

The sensing means of the second device should sense as many boundary points as possible within its maximum sensing capability, so as to achieve the objective of precisely calculating the size of the touched area.

At step C3, the second device acquires the touched graph information of the first device, and calculates the area of the touched graph based on the touched graph information.

Specifically, the second device calculates the area of a graph surrounded by the boundary points based on the positional information of all boundary points sensed by the sensing means. If the graph is a regular graph, it is easy to calculate its area; if it is an irregular graph, the area of the graph is calculated through integral method. The specific calculation methods are well known in the prior art, and hence not defined herein.

At stepC4, it is determined whether the calculated area of the graph coincides with the area of the graph preset at step C1. If the result of the determination is "Yes", the process proceeds to step C5; and if there is no preset area command corresponding to the area of the graph calculated at step C3, the process returns to step C2.

Since it is impossible to avoid than to reduce errors, a certain range of errors is allowed in the second device in the third embodiment of the present invention. If the size of the calculated area is within the allowable error range, it is also determined to execute the cleaning command. If the error range is exceeded, the second device cannot recognize this operation command, and the process returns to step C2.

At step C5, the second device executes the operation command represented by the area parameter, where the command is to execute cleaning in this embodiment.

The method according to the third embodiment of the present invention is advantageous in that, by sensing different touched graphs via the touch screen of the second device, the areas of the touched graphs are calculated to determine whether the areas of the graphs coincide with the areas of the preset graphs, and if the result of the determination is "yes", the corresponding operation command is executed so as to complete the control of one device on other device. Since the areas of the graphs are variegated, the use of graphs as operation commands greatly increases the number of operation commands. Moreover, one graph is used to execute only one operation command, so that the operation command represented by the graph would not be different due to different execution environments, and the operation is hence rendered direct and fast.

As apparent through the above descriptions to the second and third embodiments of the present invention, the area and the shape of a graph may be combined to serve as the command of the graph, and the specific operational process is easily achievable by combining the second and third embodiments. In this way, the graphic commands are greatly increased. Moreover, one graph is used to execute only one operation command, so that the operation command represented by the graph would not be different due to different execution environments, and the operation is hence rendered direct and fast.

The above description is directed to the methods according to the embodiments of the present invention, whereby a method of mechanically controlling the device can be obtained. However, since the touch screen of the second device may sense the touched graph together with noises during the specific process of operation to thereby affect recognition of the operation command, a noise filtering function is added in the second device for effective removal of noises. Referring to Figs. 2 and 3 respectively, a step D is inserted between steps B2 and B3 in the second embodiment or between steps C2 and C3 in the third embodiment.

At step D, the received touch data is analyzed to remove touch points considered to be noises.

It is appreciated that the received graph information contains certain noises, and individual or discontinuous points are usually considered to be noises. A noise removal algorithm may be performed to remove some points not continuous with other points, whereby the calculated parameters are made more precise.

The parameters of the touched graph is calculated by adding the noise filtering function in the methods of the second and third embodiments to determine, in accordance with the calculated graph parameters, whether the touched graph sensed by the touch screen coincides with the preset graph, and if the result of the determination is "yes", the operation command represented by the touched graph is executed to complete the mechanical-to-mechanical control. The use of graphs as operation commands increases the number of operation commands. Moreover, one graph is used to execute only one operation command, so that the operation command represented by the graph would not be different due to different execution environments, and the operation is hence rendered direct and fast. Furthermore, addition of the filtering operation makes it possible for the second device to more precisely execute the command.

The above description is directed to the methods according to the embodiments of the present invention. An apparatus for executing a graphic touch command is further provided by an embodiment of the present invention. The apparatus comprises a first acquiring unit adapted to acquire touched graph information; a second acquiring unit adapted to acquire a graph parameter from the touched graph information acquired by the first acquiring unit; and an executing unit adapted to execute an operation command corresponding to the acquired graph parameter according to the graph parameter acquired by the second acquiring unit.

The apparatus further comprises a determining unit adapted to determine, in accordance with the graph parameter acquired by the second acquiring unit, whether a preset correspondence of commands contains the graph parameter; a command presetting unit adapted to preset the correspondence between operation commands and graph parameters; and a filtering unit adapted to filter noises from the touched graph information acquired by the first acquiring unit.

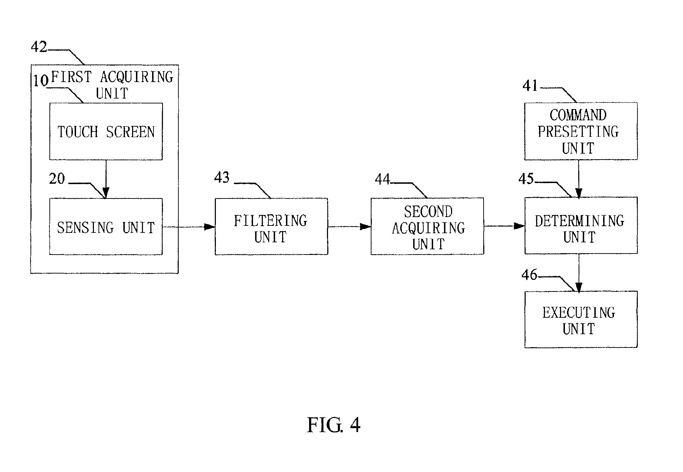

Figure 4 illustrates an apparatus for executing a graphic touch command according to a fourth embodiment of the invention. Referring to Fig. 4, the apparatus comprises a command presetting unit 41, a first acquiring unit 42, a second acquiring unit 44, a determining unit 45 and an executing unit 46.

The command presetting unit 41 is adapted to preset the correspondence between the operation commands and the graph parameters.

The first acquiring unit 42 is adapted to acquire the touched graph information.

The second acquiring unit 44 is adapted to acquire a graph parameter from the touched graph information acquired by the first acquiring unit 42.

The determining unit 45 is adapted to determine, in accordance with the graph parameter acquired by the second acquiring unit 44, whether the correspondence of commands preset by the command presetting unit 41 contains the graph parameter acquired by the second acquiring unit 44.

The executing unit 46 is adapted to execute the operation command represented by the graph in accordance with the determination result of the determining unit 45.

The touch screen in the first acquiring unit 42 contacts a touch-control panel or a touch-control head to acquire the touched graph information, and the first acquiring unit 42 transmits the acquired touch graph information to the second acquiring unit 44.

The second acquiring unit 44 calculates, in accordance with the coordinates of the sensed touch points, the parameters of a graph composed of the touch points. The parameters of the graph to be calculated includes the area parameter and/or the shape parameter of the graph, of which the shape parameter of the graph to be calculated includes one or more parameters of the length of each side, the angle of adjacent sides, the distance from the center to each side, and the position of the center of gravity. The device presets upon demand as to which parameters will be calculated. For example, only the area of the graph is calculated when different area sizes represent different operation commands, whereas it may be necessary to calculate the parameters capable of being used for determining what a regular polygon the sensed graph is, for instance, one or more parameters of the number of sides, the length of each side, and the center of the side, etc when regular polygons having different number of sides represent different operation commands.

The determining unit 45 is adapted to receive the graph parameter calculated by the second acquiring unit 44, and compares the calculated graph parameter with a graph parameter preset by the presetting unit to determine whether the calculated touched graph parameter is contained in the preset graph parameter. If the result of the determination is "yes", the determining unit 45 transmits an instruction to execute the operation command represented by the touched graph to the executing unit 46, and the executing unit 46 executes the operation command represented by the touched graph upon reception of the command. If the result of the determination is "no", the executing unit 46 does not perform any operation, and the device is in a state to sense the touched graph.

In practical application the first acquiring unit 42 may also be configured to include a touch screen 10 and a sensing unit 20.

The touch screen 10 is adapted to contact the touched graph.

The sensing unit 20 is adapted to sense the touched graph information from the touched graph contacted by the touch screen 10, where touched graph information includes coordinates of touch points composing the touched graph.

When the touch screen 10 contacts a touch-control head having a certain shape to generate a multi-point touch signal, this multi-point touch signal is transferred to the sensing unit 20, and the sensing unit 20 determines the coordinate positions of the touch points in accordance with the received touch signal.

The sensing unit 20 divides the touch screen 10 into points of a certain number on a coordinate system, and the number of the points depends on the sensitivity and resolution of the touch screen 10. The coordinate positions in the sensing unit 20 may be coordinates such as (X, Y) in the Cartesian coordinate system, or coordinates in such other coordinate systems as the polar coordinate system. When the touch signal is transferred to the sensing unit 20, the touch points are mapped into coordinates and transmitted to the second acquiring unit 44 in the form of coordinates.

The aforementioned apparatus for executing a touch command according to the fourth embodiment of the present invention may further comprise a filtering unit 43. Referring still to Fig. 4, the filtering unit 43 is adapted to filter part of the touched graph information acquired by the first acquiring unit 42, which is considered to be noise information, from the touched graph information, and transmits the filtered touched graph information to the second acquiring unit 44.

By contacting different touched graphs on the touch screen, the apparatus for executing a graphic touch command according to the fourth embodiment of the present invention may execute the execution operation command represented by the corresponding touched graph, so as to perform control of the device. Since the graphs are variegated, the use of graphs as operation commands greatly increases the number of operation commands. Moreover, one graph is used to execute only one operation command, so that the operation command represented by the graph would not be different due to different execution environments, and the operation is hence rendered direct and fast. Furthermore, addition of the filtering function effectively filters the interference noises and makes it possible for the device to more precisely execute the command.

A fifth embodiment of the present invention provides a mobile terminal, comprising a first acquiring unit adapted to acquire touched graph information, which may be a touch screen of a user interface of the mobile terminal; a second acquiring unit adapted to acquire a graph parameter from the touched graph information acquired by the first acquiring unit, which may be a computing module in a processor CPU of the mobile terminal; and an executing unit is adapted to execute an operation command corresponding to the acquired graph parameter according to the graph parameter acquired by the second acquiring unit, which may be implemented by the processor CPU of the mobile terminal.

The mobile terminal may further comprise a determining unit adapted to determine, in accordance with the graph parameter acquired by the second acquiring unit, whether the graph parameter is contained in a present correspondence of commands, which may be implemented by the processor CPU of the mobile terminal; a command presetting unit adapted to preset the correspondence between operation commands and graph parameters, which may be implemented by the processor CPU of the mobile terminal; and a filtering unit adapted to filter noises from the touched graph information acquired by the first acquiring unit, which may be implemented by the processor CPU of the mobile terminal.

By contacting different touched graphs on the touch screen, the mobile terminal according to the fifth embodiment of the present invention may execute the execution operation command represented by the corresponding touched graph by means of the processor CPU of the mobile terminal, so as to perform control of the device. Since the graphs are variegated, the use of graphs as operation commands greatly increases the number of operation commands. Moreover, one graph is used to execute only one operation command, so that the operation command represented by the graph would not be different due to different execution environments, and the operation is hence rendered direct and fast. Furthermore, addition of the filtering function effectively filters the interference noises and makes it possible for the mobile terminal to more precisely execute the operation command.

It is appreciated to persons ordinarily skilled in the art, all or a part of steps in the methods of the above embodiments may be carried out by a program that instructs relevant hardware, and the program may be stored in a computer-readable storage medium. When being executed, the program instructs to execute the steps of acquiring touched graph information from a touched graph, acquiring a graph parameter from the touched graph information, and executing an operation command corresponding to the graph parameter in response to acquirement of the graph parameter.

The aforementioned storage medium may be a read-only memory, a magnetic disc or an optical disc.

The method and the apparatus for executing a graphic touch command according to the embodiments of the present invention are described in detail above. Specific examples are used herein to illustrate the principles and embodiments of the present invention. Explanations to the above embodiments merely aim to help understand the methods and essential spirits of the present invention. Meanwhile, it is apparent to persons ordinarily skilled in the art that modifications in terms of the specific embodiments and the scope of application of the present invention may be made without departing from the spirits of the present invention. Thus, the contents of the Description shall not be understood as restrictive to the present invention.

## Claims

1. A method for executing a graphic touch command, comprising:
acquiring touched graph information from a touched graph;
acquiring a graph parameter from the touched graph information; and
executing an operation command corresponding to the graph parameter according to the acquired graph parameter.

2. The method according to claim 1, wherein the touched graph information includes coordinates of points that compose the touched graph.

3. The method according to claim 2, wherein the touched graph is a regular triangle;
acquiring the touched graph information comprises acquiring coordinates of the three vertices of the touched regular triangle;
acquiring the graph parameter comprises calculating, in accordance with the coordinates of the three vertices of the touched regular triangle, any one or combination of the parameters: lengths of the three sides of the regular triangle, sizes of the three angles, coordinate of the central position, a position of the center of gravity, a distance from the central position to each side, and the area; and
executing the operation command corresponding to the graph parameter according to the acquired graph parameter comprises determining whether the preset correspondence of commands contains any one or combination of the parameters: lengths of the three sides of the regular triangle, sizes of the three angles, the coordinate of the central position, the position of the center of gravity, the distance from the central position to each side, and the area; and, if the result of the determination is "yes", executing the operation command corresponding to the graph parameter.

4. The method according to any one of claims 1 to 3, wherein after acquiring the touched graph information and before acquiring the graph parameter, the method further comprises filtering noises from the acquired touched graph information.

5. An apparatus for executing a graphic touch command, comprising:
a first acquiring unit adapted to acquire touched graph information;
a second acquiring unit adapted to acquire a graph parameter from the touched graph information acquired by the first acquiring unit; and
an executing unit adapted to execute an operation command corresponding to the graph parameter according to the graph parameter acquired by the second acquiring unit.

6. The apparatus according to claim 5, further comprising:
a determining unit adapted to determine, in accordance with the graph parameter acquired by the second acquiring unit, whether a preset correspondence of commands contains the graph parameter.

7. The apparatus according to claim 5 or 6, further comprising:
a command presetting unit adapted to preset a correspondence between operation commands and graph parameters.

8. The apparatus according to claim 5, 6 or 7, further comprising:
a filtering unit adapted to filter noises from the touched graph information acquired by the first acquiring unit.

9. The apparatus according to any one of claims 5 to 8, wherein the first acquiring unit comprises:
a touch screen adapted to contact the touched graph; and
a sensing unit adapted to sense the touched graph information from the touched graph contacted by means of the touch screen, the touched graph information including coordinates of touch points that compose the touched graph.

10. A mobile terminal, comprising an apparatus for executing a graphic touch command according to any one of claims 5 to 9.
